# FASCICULE DE BREVET EUROPEEN

(11) **EP 0 847 172 B1**
(45) Date de publication et mention de la délivrance du brevet: **28.07.2004**
(21) Numéro de dépôt: 97203683.4
(22) Date de dépôt: 25.11.1997
(51) Int. Cl.: H04M 1/72, H02J 7/00

(54) **Téléphone sans fil rechargeable dans toute position**
Schnurloses, in jeder Lage wiederaufladbares Telefon
Cordless and in all positions rechargeable telephone

(30) Priorité: 06.12.1996 FR 9615048
(43) Date de publication de la demande: 10.06.1998
(73) Titulaire: Koninklijke Philips Electronics N.V., 5621 BA Eindhoven (NL)
(72) Inventeur: Lebrun, Jean-Pierre, 75008 Paris (FR); Pinel, Marcel, 75008 Paris (FR)
(74) Mandataire: Chaffraix, Jean

(56) Documents cités:
- DE-A- 3 412 851
- US-A- 3 686 444
- US-A- 5 432 836
- US-A- 5 479 486
- US-A- 5 519 776
- PATENT ABSTRACTS OF JAPAN vol. 017, no. 301 (E-1378), 10 juin 1993 & JP 05 022388 A (SHARP CORP), 29 janvier 1993,

## Description

L'invention concerne un téléphone sans fil comportant au moins :
- un réceptacle qui comporte une butée de maintien et deux contacts de charge de réceptacle supportés par ladite butée,
- un combiné qui comporte une face avant, une face arrière, un pied, et des contacts de charge de combiné supportés par ledit pied, et qui est susceptible de se loger dans ledit réceptacle en position face avant apparente ou face arrière apparente, le pied dudit combiné présentant une forme permettant de poser ledit combiné sur son pied directement sur un support horizontal,
- ledit combiné et/ou ledit réceptacle comportant des moyens pour assurer une polarisation correcte des contacts en regard quelque soit la position du combiné dans le réceptacle,
- ledit réceptacle ayant une face arrière qui présente une forme permettant audit réceptacle d'être positionné directement sur un support horizontal afin d'être utilisé en position bureau.

Un tel téléphone sans fil est notamment décrit dans le brevet américain 5,519,776 du 21 Mai 1996.

Le téléphone décrit dans ce document est doté d'une structure qui permet de placer le réceptacle en position horizontale ou en position verticale, le combiné étant susceptible d'être rechargé qu'il soit placé à l'intérieur du réceptacle en position face avant apparente ou face arrière apparente.

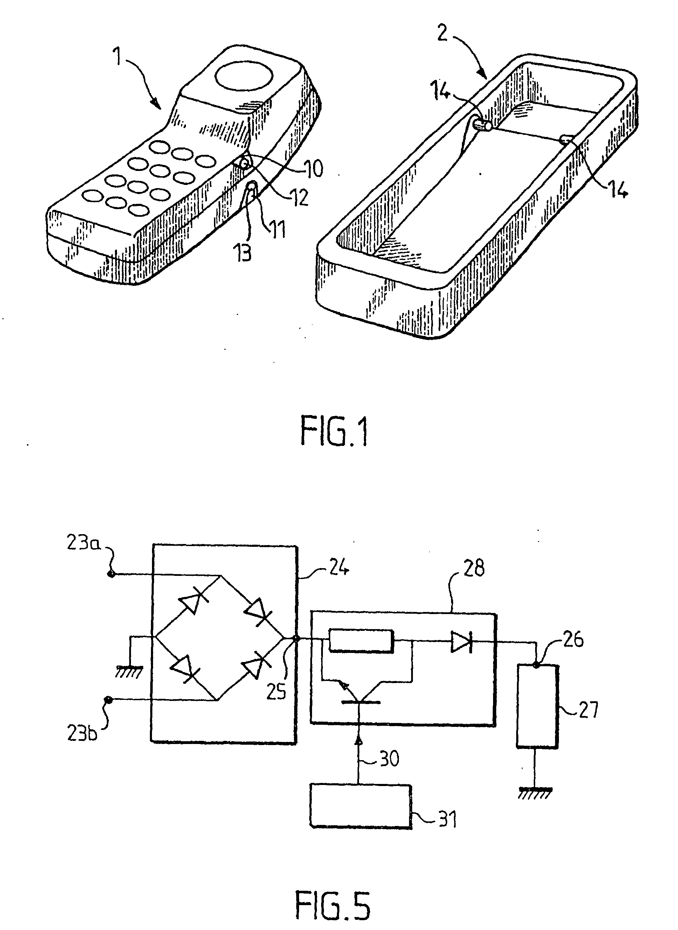

Pour cela, comme indiqué sur la figure 1, le combiné proposé 1 est doté de deux paires d'encoches 10 et 11 qui se situent sur les parois latérales du combiné du côté de sa face avant d'une part et du côté de sa face arrière d'autre part. Un contact de charge de combiné référencé 12 ou 13 est placé au fond de chaque encoche. Par ailleurs, un ergot 14 est prévu sur chacune des parois latérales intérieures du réceptacle 2. Ces ergots constituent des contacts de charge de réceptacle et ils sont destinés à venir se placer dans les encoches du combiné lorsque celui-ci est en position dans le réceptacle.

Ces ergots assurent en même temps une connexion mécanique entre le combiné et le réceptacle. Il est ainsi possible de fixer le réceptacle sur un mur et d'assurer le maintien du combiné dans les deux positions face avant apparente et face arrière apparente.

La solution décrite dans ce brevet présente l'inconvénient d'être relativement coûteuse et complexe à fabriquer, et elle oblige à prévoir quatre contacts de charge sur le combiné. De plus elle est contraignante d'un point de vue esthétique.

L'invention a notamment pour but de proposer une solution qui remédie à ces inconvénients.

Un téléphone du type de celui décrit dans le paragraphe introductif est décrit dans la demande de brevet allemand DE 3412851 A1. Le téléphone décrit dans cette demande de brevet allemand comporte un réceptacle et un combiné. Le réceptacle comporte une butée de maintien et deux contacts de charge de réceptacle supportés par ladite butée. Le combiné comporte une face avant, une face arrière, un pied, et des contacts de charge de combiné supportés par ledit pied. Le combiné et le réceptacle comportent des moyens pour assurer une polarisation correcte des contacts en regard quelque soit la position du combiné dans le réceptacle. Le combiné est susceptible de se loger dans le réceptacle en position face avant apparente ou face arrière apparente. Il comporte un pied qui présente une forme permettant de poser ledit combiné sur son pied directement sur un support horizontal.

Un autre but de l'invention est de proposer un téléphone qui soit utilisable dans un maximum de positions imaginables de charge ou de repos.

Ce but est atteint avec un téléphone tel que décrit dans le paragraphe introductif et caractérisé en ce que :
- ladite butée de maintien ne couvre qu'une partie dudit pied afin de permettre de tirer à soi ledit combiné lorsque ledit réceptacle est positionné directement sur un support horizontal afin d'être utilisé en position bureau,
- la face arrière dudit réceptacle comporte des moyens de fixation d'un adaptateur pour position murale, pour imposer un angle de l'ordre de 20° entre la face arrière du réceptacle et la verticale lorsque ledit réceptacle est utilisé en position murale.

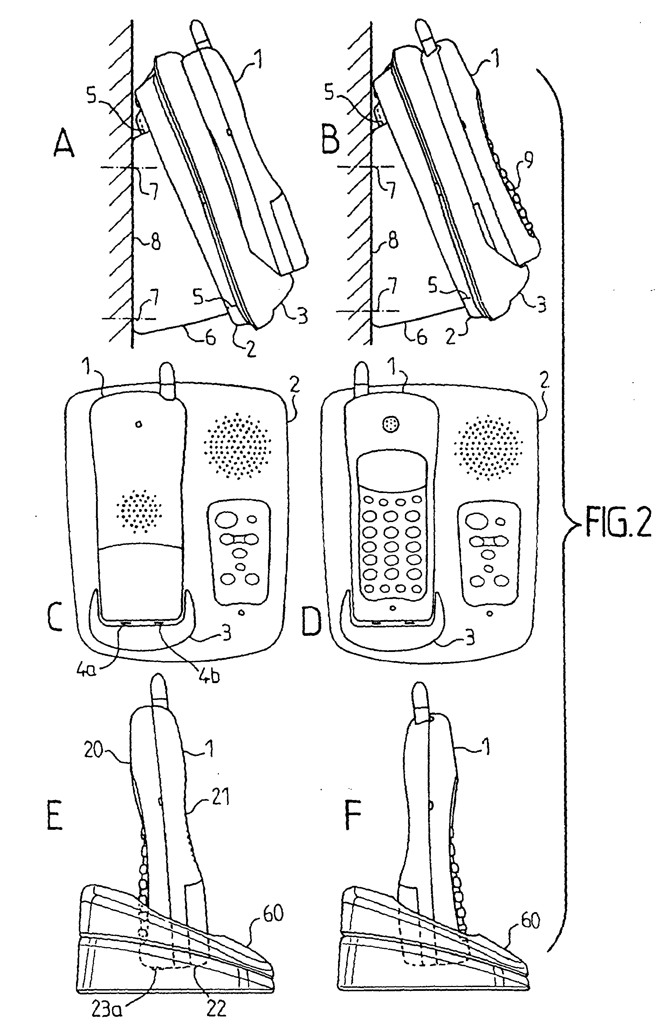

L'invention consiste donc à proposer un téléphone prévu pour permettre toutes les positions naturelles de repos et de charge: le réceptacle est susceptible d'être utilisé en position murale ou en position bweau ; le combiné est susceptible d'être posé sur son pied directement sur un support horizontal, dans ledit réceptacle face avant ou face arrière apparente, ou dans ledit chargeur sur son pied, face avant ou face arrière apparente. Ces diverses positions sont représentées à titre d'exemple sur les figures 2a à 2f.

On notera que le brevet américain US 5,432,836 décrit un téléphone filaire susceptible d'être utilisé en position murale ou en position bureau. La face arrière du réceptacle de ce téléphone est constituée d'un plan supérieur et d'un plan inférieur faisant un angle entre eux. Pour une utilisation en position bureau, l'adaptateur doit être fixé sur le plan supérieur. Pour une utilisation en position murale, il doit être fixé sur le plan inférieur. Des moyens mécaniques sont prévus pour fixer le combiné au réceptacle. En position murale, ces moyens ont pour fonction d'empêcher que le combiné ne tombe du réceptacle.

Par ailleurs le brevet américain US 5,479,486 décrit un téléphone sans fil composé d'un combiné doté d'un pied, et d'un chargeur. Le chargeur est prévu pour que le combiné puisse être posé sur son pied dans le chargeur.

L'invention sera mieux comprise et d'autres détails apparaîtront à la lumière de la description qui va suivre en regard des dessins annexés qui sont donnés à titre d'exemple non limitatif et dans lesquels:
- la figure 1 représente un téléphone sans fil selon l'art antérieur,
- les figures 2a à 2f représentent différentes vues d'un téléphone sans fil selon l'invention dans différentes positions,
- la figure 3 représente une vue de profil d'un téléphone selon l'invention, lorsque le combiné repose dans le réceptacle en position face avant apparente,
- la figure 4 représente une vue de profil d'un téléphone selon l'invention, lorsque le combiné repose dans le réceptacle en position face arrière apparente,
- la figure 5 représente un circuit de charge de batterie utilisé dans un combiné selon l'invention.

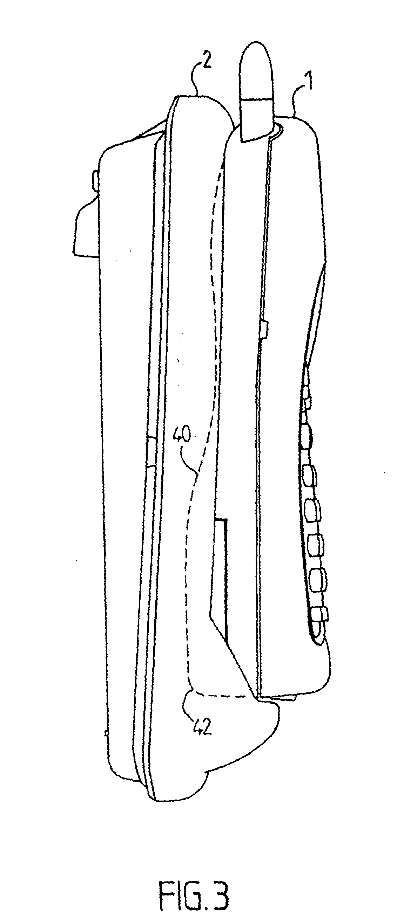

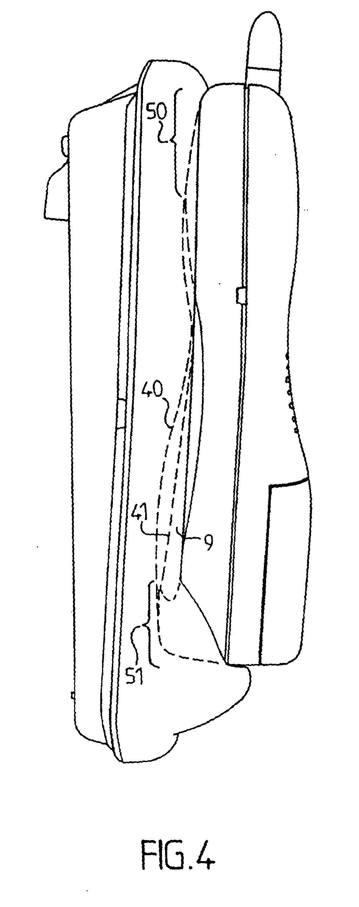

Un téléphone selon l'invention est représenté dans différentes positions sur les figures 2a à 2f et sur les figures 3 et 4. Ce téléphone comporte un combiné 1 et un réceptacle 2. Le réceptacle 2 comporte une butée de maintien 3 qui supporte deux contacts de charge, 4a et 4b, appelés contacts de charge de réceptacle.

Il est susceptible de prendre une position comprise entre un minimum et un maximum par rapport à la verticale. Des moyens de fixation 5 sont prévus pour déterminer ladite position minimale. Dans le mode de réalisation décrit ici à titre d'exemple, ces moyens de fixation sont constitués par des encoches 5 situées sur la face arrière du réceptacle dans lesquelles viennent s'enficher des ergots d'un adaptateur 6 qui est susceptible d'être fixé à un support 7 par deux points d'encrage 8. Ces moyens de fixation permettent d'imposer une position minimum du réceptacle de 20° par rapport à la verticale, la position maximum du réceptacle étant constituée par l'horizontale.

Le combiné 1 d'un téléphone selon l'invention est doté d'un clavier 9 et comporte une face avant 20, une face arrière 21, un pied 22, et des contacts de charge 23a et 23b, appelés contacts de charge de combiné. Les contacts de charge de combiné sont supportés par le pied 22 du combiné. Le combiné 1 est susceptible de se loger dans ledit réceptacle en position face avant apparente ou face arrière apparente, les contacts de charge de combiné et de réceptacle se situant dans les deux cas en regard les uns des autres.

Afin d'assurer une polarisation correcte des contacts en regard quelque soit la position du combiné dans le réceptacle, les contacts de charge de combiné sont connectés à un pont redresseur, comme cela est représenté sur la figure 5. D'après la figure 5, un combiné selon l'invention contient un circuit de charge de batterie qui comporte un pont redresseur 24 connecté aux deux contacts de charge 23a et 23b. La sortie 25 du pont redresseur 24 est reliée au pôle positif 26 de la batterie 27 du combiné par l'intermédiaire d'un circuit de commande 28 qui tient compte des niveaux respectif des potentiels aux points 25 et 26, ainsi que d'ordres de charge 30 donné par un microprocesseur 31 contenu dans ledit combiné. Dans un autre mode de réalisation, il est possible de placer le pont redresseur dans le réceptacle, au lieu de le placer dans le combiné.

Enfin, comme cela apparaît sur les figures 3 et 4, le réceptacle 2 présente une courbure 40 qui s'adapte aux courbures 41 et 42 des faces avant et arrière du combiné.

Dans le mode de réalisation qui est décrit ici à titre d'exemple les courbures 40 du réceptacle et 42 de la face arrière du combiné sont identiques de telle sorte que lorsque le combiné est en position dans le réceptacle, face avant apparente (figure 2b), l'adéquation entre le réceptacle et le combiné est totale. En revanche, les courbures 40 du réceptacle et 41 du combiné présentent des formes similaires mais elles sont différentes. Ainsi, lorsque le combiné est en position dans le réceptacle, face arrière apparente (figure 2a), le clavier 9 du combiné ne repose pas sur le réceptacle. Le maintien du combiné est assuré par deux surfaces de contact 50 et 51 situées aux extrémités du combiné.

De façon avantageuse, le pied 22 du combiné est suffisamment plat pour qu'il puisse se maintenir dans la position debout avec une stabilité satisfaisante. Ainsi, le combiné est susceptible d'être posé soit directement sur un support horizontal, soit dans un support 60 qui est doté de contours s'adaptant à la forme dudit pied. De façon avantageuse, ces contours sont choisis de telle sorte que le combiné 1 puisse reposer dans le support 60 en position face avant apparente ou face arrière apparente. Comme cela est représenté sur les figures 2e et 2f, le support 60 est par exemple un chargeur d'appoint susceptible d'être posé sur un bureau ou fixé à un mur.

L'invention n'est pas limitée aux modes de réalisation qui viennent d'être décrits. En particulier, d'autres formes sont susceptibles d'être utilisées pour le réceptacle et pour le combiné. Par exemple, il n'est pas nécessaire que les courbures du combiné et du réceptacle s'adaptent de la façon qui a été décrite ici à titre d'exemple. Il suffit qu'elles présentent suffisamment de surfaces de contact disposées de façon à assurer le maintien du combiné dans le réceptacle.

## Revendications

1. Téléphone sans fil comportant au moins:
- un réceptacle (2) qui comporte une butée de maintien (3) et deux contacts de charge de réceptacle (4a, 4b) supportés par ladite butée,
- un combiné (1) qui comporte une face avant (20), une face arrière (21), un pied (22), et des contacts de charge de combiné (23a, 23b) supportés par ledit pied, et qui est susceptible de se loger dans ledit réceptacle en position face avant apparente ou face arrière apparente, le pied dudit combiné présentant une forme permettant de poser ledit combiné sur son pied directement sur un support horizontal,
- ledit combiné et/ou ledit réceptacle comportant des moyens (24) pour assurer une polarisation correcte des contacts en regard quelque soit la position du combiné dans le réceptacle,
- ledit réceptacle ayant une face arrière qui présente une forme permettant audit réceptacle d'être positionné directement sur un support horizontal afin d'être utilisé en position bureau, **caractérisé en ce que** :
- ladite butée de maintien (3) ne couvre qu'une partie dudit pied afin de permettre de tirer à soi ledit combiné (1) lorsque ledit réceptacle (2) est positionné directement sur un support horizontal afin d'être utilisé en position bureau,
- la face arrière dudit réceptacle comporte des moyens de fixation (5) d'un adaptateur (6) pour position murale, pour imposer un angle de l'ordre de 20° entre la face arrière du réceptacle et la verticale lorsque ledit réceptacle est utilisé en position murale.

2. Téléphone sans fil selon la revendication 1, **caractérisé en ce que** les moyens pour assurer une polarisation correcte des contacts en regard comportent un pont redresseur.

## Claims

1. A cordless telephone comprising at least:
- a receptacle (2) which has a retaining stop (3) and two receptacle charge contacts (4a, 4b) supported by said stop,
- a handset (1) which has a front face (20), a back face (21), a base (22) and handset charge contacts (23a, 23b) supported by said base, and which allows of being accommodated in said receptacle in a front face forward or back face forward position, the base of said handset having a curved shape that permits to put said handset on its base directly on a horizontal support,
- said handset and/or said receptacle comprising means (24) to ensure a correct biasing of the contacts opposite each other whatever the position of the handset in the receptacle,
- said receptacle having a back face that has a curved shape that permits said receptacle to be placed directly on a horizontal support in order to be used in a desktop position, **characterized in that**:
- said retaining stop (3) covers only part of the base to permit said handset (1) to be taken out when said receptacle (2) is placed directly on a horizontal support in order to be used in a desktop position,
- the back face of said receptacle comprises fastening means (5) for mounting an adapter (6) on a wall, to impose an angle of the order of 20° between the back face of the receptacle and the vertical when said receptacle is used in a position on a wall.

2. A cordless telephone as claimed in claim 1, **characterized in that** said means for ensuring a correct biasing of the contacts opposite each other comprise a rectifier bridge.

## Patentansprüche

1. Schnurloses Telefon mit mindestens:
- einem Aufnahmeteil (2) mit einem Halteanschlag (3) und zwei Aufnahmeteil-Ladekontakten (4a, 4b), welche von dem besagten Anschlag getragen werden,
- einem Handgerät (1) mit einer Vorderseite (20), einer Rückseite (21), einem Fuß (22) und Handgerät-Ladekontakten (23a, 23b), welche von dem besagten Fuß getragen werden und der in das besagte Aufnahmeteil in Position sichtbare Vorderseite oder sichtbare Rückseite hineingegeben werden kann, wobei der Fuß des besagten Handgeräts eine Form aufweist, welche es ermöglicht, das besagte Handgerät auf seinen Fuß direkt auf einen horizontalen Träger zu stellen,
- das besagte Handgerät und/oder das besagte Aufnahmeteil Mittel (24) aufweisen, um eine korrekte Polarisation der Kontakte hinsichtlich einer beliebigen Position des Handgeräts im Aufnahmeteil zu versichern,
- das besagte Aufnahmeteil eine Rückseite hat, die eine Form aufweist, um es dem besagten Aufnahmeteil zu ermöglichen, direkt auf einem horizontalen Träger ausgerichtet zu werden, um in Schreibtischposition verwendet zu werden,
**dadurch gekennzeichnet, dass**:
- der besagte Halteanschlag (3) nur einen Teil des besagten Fußes deckt, um es zu ermöglichen, das besagte Handgerät (1) zu sich zu ziehen, wenn das besagte Aufnahmeteil (2) direkt auf einem horizontalen Träger ausgerichtet ist, um in Schreibtischposition verwendet zu werden,
- die Rückseite des besagten Aufnahmeteils Mittel für die Befestigung (5) eines Adapters (6) für Wandposition aufweist, um einen Winkel der Größe von 20° zwischen der Rückseite des Aufnahmeteils und der Vertikalen vorzugeben, wenn das besagte Aufnahmeteil in Wandposition benutzt wird.

2. Schnurloses Telefon nach Anspruch 1, **dadurch gekennzeichnet, dass** die Mittel zur Versicherung einer korrekten Polarisation der gegenüberliegenden Kontakte eine Gleichrichterbrücke enthalten.
